(19) **Europäisches Patentamt**
**European Patent Office**
**Office européen des brevets**

(11) **EP 0 646 448 B1**

(12) **EUROPÄISCHE PATENTSCHRIFT**

| | |
|---|---|
| (45) Veröffentlichungstag und Bekanntmachung des Hinweises auf die Patenterteilung:<br>**06.10.1999 Patentblatt 1999/40** | (51) Int. Cl.⁶: **B29C 45/17**, B29C 45/66 |

(21) Anmeldenummer: **94114483.4**

(22) Anmeldetag: **15.09.1994**

(54) **Spritzgiessmaschine zur Verarbeitung von plastifizierbaren Massen**

Injection moulding machine for processing plastifiable materials

Machine à mouler par injection pour traiter des matières plastifiables

(84) Benannte Vertragsstaaten:
**AT CH DE ES FR GB IT LI NL**

(30) Priorität: **30.09.1993 DE 4333365**
**02.04.1994 DE 4411649**

(43) Veröffentlichungstag der Anmeldung:
**05.04.1995 Patentblatt 1995/14**

(73) Patentinhaber: **Hehl, Karl**
**72290 Lossburg (DE)**

(72) Erfinder: **Hehl, Karl**
**72290 Lossburg (DE)**

(74) Vertreter: **Reinhardt, Harry et al**
**Mayer, Frank, Reinhardt,**
**Schwarzwaldstrasse 1A**
**75173 Pforzheim (DE)**

(56) Entgegenhaltungen:
**EP-A- 0 504 580          EP-A- 0 554 068**
**EP-A- 0 620 095**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft eine Spritzgießmaschine zur Verarbeitung von plastifizierbaren Massen, wie Kunststoffen, keramischen Massen und dergleichen, nach dem Oberbegriff des Anspruches 1.

Bei einer bekannten derartigen Spritzgießmaschine (EP-A 554 068) wird ein Verformungselement vorgesehen, das die Kräfte um den Formspannraum herumleitet. Der bewegliche Formträger ist auf dem Maschinenfuß an Führungen abgestützt und das Verformungselement greift am stationären Formträger und an einem Abstützelement für die Schließeinrichtung des beweglichen Formträgers an. Dadurch ist es möglich, daß die beim Formschluß auftretenden Kräfte nicht in den Maschinenfuß abgeleitet werden, sondern lediglich zu einer Verformung im Verformungselement führen. Die Verformungselemente sind jedoch groß und unhandlich, so daß insbesondere beim Transport in ferne Länder ein erheblicher Aufwand für den Transport der Teile getrieben werden muß. Ferner sind die Verformungselemente unmittelbar an den Seiten der Formträger angelenkt, so daß sich eine Formparallelität nur schwer verwirklichen läßt, da hier keine Einstellmöglichkeit besteht. Da keine gesonderten Gelenke vorhanden sind, kommt es nach 1 bis 10 Millionen Lastspielen zu Verschleißerscheinungen an den Anlenkungspunkten, die einen Austausch von Formträger, Abstützelement und Verformungselement erforderlich machen. Eine Aufteilung des Verformungselements in mehrere Teile ist nicht vorgesehen und nicht beabsichtigt.

Aus der US-PS 4,345,893 ist ferner eine Spritzgießmaschine bekannt, bei der nach dem gleichen Prinzip wie in der EP-OS 554 068 Verformungselemente vorgesehen sind, die Formträger und Abstützelement für eine Schließeinrichtung umgreifen. Allerdings sind hier die Verformungselemente schwenkbar im Bereich des stationären Formträgers angeordnet, so daß sie beim Austausch der Gießform keine Behinderung darstellen. In rückgeschwenkter Form kommen stationärer Formträger und Abstützelement in Anlage, so daß sich ein geschlossener Kraftrahmen ergibt. Da die Verformungselemente durch einen Hohlrahmen gebildet sind, ist zwar die Gießform seitlich zugänglich, jedoch besteht noch nicht ein völlig freier Zugang auch nach schräg oben.

Die Anlage am Kraftrahmen wird lediglich durch Anlageflächen hergestellt, ohne daß weitere Gelenke vorgesehen sind.

Aus der DE-A 28 53 577 ist es bekannt, stationären und beweglichen Formträger über ein Hebelsystem miteinander zu verbinden. Das Hebelsystem umfaßt zwei vertikal stehende Hebel und einen horizontal liegenden am Maschinengestell befestigten, der gelenkig mit den Hebeln verbunden ist. Gegenüber dem Längsträger befindet sich in einem größeren Abstand zur Schließachse ein weiteres Verbindungselement, das durch eine Kolben-Zylinder-Einheit gebildet ist. Am beweglichen Formträger ist ein Hebel angelenkt, der über eine zweite Kolben-Zylinder-Einheit den beweglichen Formträger in Schließrichtung axial bewegt und für das Schließen der Form bestimmt ist. Nachdem die Form geschlossen ist, wird die am unteren Ende der Hebel angeordnete Kolben-Zylinder-Einheit zum Aufbringen der Schließkraft eingesetzt. Die für die Kraftaufbringung erforderliche Länge der Hebel ist jedoch durch die Bauhöhe des Maschinenfußes begrenzt.

Aus der DE-A 37 22 340 ist eine Machine bekannt, die ein der DE-A 28 53 577 vergleichbares Kraftübertragungssystem besitzt, jedoch ist zusätlich eine mehrteilige Gleichlaufvorrichtung vorgesehen. Die Gleichlaufvorrichtung ist kein Bestandteil des Kraftrahmnes oder des Antriebs für den beweglichen Formträger, so daß die dadurch gebildete Verbindung keine Kräfte aufnimmt. Ein Austausch von Lagerteilen ist nicht möglich.

Ausgehend von diesem Stand der Technik liegt der vorliegenden Erfindung die Aufgabe zugrunde, für eine Spritzgießmaschine ein leicht zu handhabendes Verformungselement zu schaffen, das leicht an unterschiedliche Spritzgußerfordernisse anpaßbar ist.

Diese Aufgabe wird durch eine Spritzgießmaschine mit den Merkmalen des Anspruches 1 gelöst.

Dadurch, daß das Verformungselement mehrteilig ausgebildet ist, ergibt sich zunächst eine Aufteilung des Gesamtgewichts des Verformungselements in mehrere Einzelelemente, die je für sich leichter sind. Bei Lieferungen in ferne Länder ist es leichter, die kompakten Einzelteile zu versenden, als einen geschlossenen Bügel, was sich vor allem bemerkbar macht, wenn im Laufe von Nachrüstaktionen bestehende Spritzgießmaschinen auf das Verformungselement umgerüstet werden. Nicht zuletzt hat aber die Aufteilung des Verformungselements in mehrere Teile den Vorteil, daß die Einzelteile aus Brennzuschnitten gebildet werden können, wobei eine Aufteilung so erfolgen kann, daß zumindest in geometrischer Hinsicht das Material durch Aneinanderlegen der Einzelteile weitestgehend plattenweise ausgenutzt wird.

Durch die Mehrteiligkeit wird ein aktiv bewegbarer Kraftrahmen, in dem die Teile gegeneinander bewegbar sind, geschaffen. Diese Bewegung kann sowohl dadurch erfolgen, daß sich ein Teil parallel zum anderen Teil in Schließrichtung zwischen den Formträgern erstreckt, jedoch ist es auch denkbar, das zweite Teil in die entgegengesetzte Richtung, z.B. unter die Spritzgießeinheit zu verlängern oder lediglich dorthin zu erstrecken, um dort ggf. eine weitere Antriebseinheit vorzusehen.

In diesem Moment wirken die einzelnen Teile als verlängerte Hebel im Sinne der DE-A 28 53 577. Die Hebel sind hier lediglich nach innen umgeschlagen. Während bei nur vertikal stehenden Hebeln die Länge der Hebel durch die Höhe des Maschinenfußes begrenzt ist, kann bei einer Anordnung der Hebel in Schließrichtung ausgenutzt werden, daß bei größer werdenden Maschinen und Formspannräumen auch die Länge der Hebel bis zum gegenüberliegenden Anlenkungspunkt wächst. Dadurch ergibt sich von selbst eine Anpassung an größere Kräfte, insbesondere wenn durch eine Antriebseinrichtung die Schließkraft über den Hebel aufgebracht werden soll. Es ist auch beachten, daß die Antriebseinrichtung der Erfindung nur innerhalb des Kraftrahmens angreift, während Element (13) in der DE-A- 2853577 am Maschinengestell befestigt ist.

Eine Ausgestaltung nach den Ansprüchen 3 oder 4 ermöglicht eine Entkopplung der für die Bewegung des beweglichen Formträgers erforderlichen Linearbewegung von der für die Aufbringung der Schließkraft erforderlichen Bewegung. Diese Bewegung erfolgt dabei über einen "liegenden" Kniehebel, bei dessen Betätigung die Schließkraft aufgebracht wird. Der Angriffspunkt für die Antriebseinrichtung ist dabei jedoch insbesondere nach Anspruch 4 und 5 so weit vom Aufbringungspunkt der Kraft entfernt, daß aufgrund des Hebelgesetzes nur ein Teil der als Schließkraft wirkenden Kraft zur Aufbringung der Kraft erforderlich ist. Auch hier wird innerhalb des Verformungselements aktiv die Schließkraft erzeugt.

Eine Ausgestaltung nach Anspruch 6 ermöglicht eine auch in Schließrichtung nahezu verformungsfreie Übertragung der Kräfte innerhalb der Einzelteile des Verformungselements. Dadurch ist ein symmetrischer gabelförmiger Angriff möglich, der die Lebensdauer des Gesamtsystems erhöht.

Ebenso kann bei einer Ausbildung der Gelenke nach Anspruch 7 die Kraftübertragung gleichmäßig und somit weitgehend ohne Biegebeanspruchung von Abstützelement und stationärem Formträger erfolgen.

Eine Ausbildung nach den Ansprüchen 8 bis 9 bringt im Gelenkbereich, also im Anschlußbereich an das Verformungselement vielfältige Anpassungs- und Justiermöglichkeiten. Durch die Austauschbarkeit von Gelenk und Gelenkpfanne können die stärker beanspruchten Gelenkteile leicht ausgetauscht werden und Verschleißerscheinungen an Verformungselement und stationärem Formträger oder Abstützelement werden vermieden. Nach Anspruch 9 kann das Formaufspannmaß leicht verändert werden, um bedarfsweise geringere Werkzeugmaße, wie z.B. im asiatischen Raum üblich, zu berücksichtigen.

Im folgenden wird die Erfindung anhand der Zeichnungen näher erläutert. Es zeigen:

| Fig. 1 | eine Formschließeinheit einer Spritzgießmaschine in einer Seitenansicht in einem ersten Ausführungsbeispiel, |
| Fig. 2, 3 | eine dreidimensionale Darstellung des von der Spritzgießmaschine abgenommenen, aktiv bewegbaren Verformungselements |
| Fig. 4, 4a | einen Schnitt durch ein Gelenk mit und ohne Unterlegstück, |
| Fig. 5 | eine Ansicht gemäß Fig. 1 eines zweiten Ausführungsbeispiels, |
| Fig. 6 | eine Ansicht gemäß Fig. 1 eines dritten Ausführungsbeispiels mit einem aktiv betätigbaren Verformungselement, |
| Fig. 7 | eine Draufsicht auf die Formschließeinheit gemäß Fig. 6, |
| Fig. 8 | eine Ansicht der Formschließeinheit gemäß Linie 8-8 von Fig. 6, |
| Fig. 9 | einen vergrößerten, teilweise geschnittenen Ausschnitt im Bereich der Antriebseinrichtung nach Linie 9-9 von Fig. 6, |
| Fig. 10 | einen Schnitt nach Linie 10-10 von Fig. 9, |
| Fig. 11 | eine den schematischen Aufbau des Verformungselements verdeutlichende Ansicht in einer Fig. 6 entsprechenden Darstellung, |
| Fig. 12 | einen vergrößerten Ausschnitt im Bereich der Lagerung des Verformungselements am stationären Formträger nach Linie 12-12 von Fig. 6, |
| Fig. 13 | einen Schnitt nach Linie 13-13 von Fig. 12. |

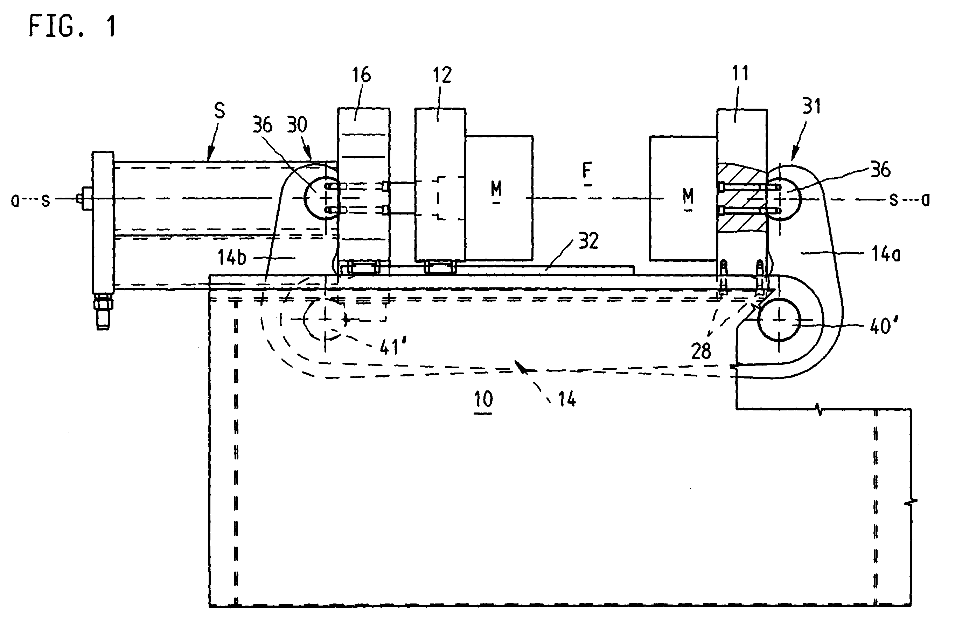

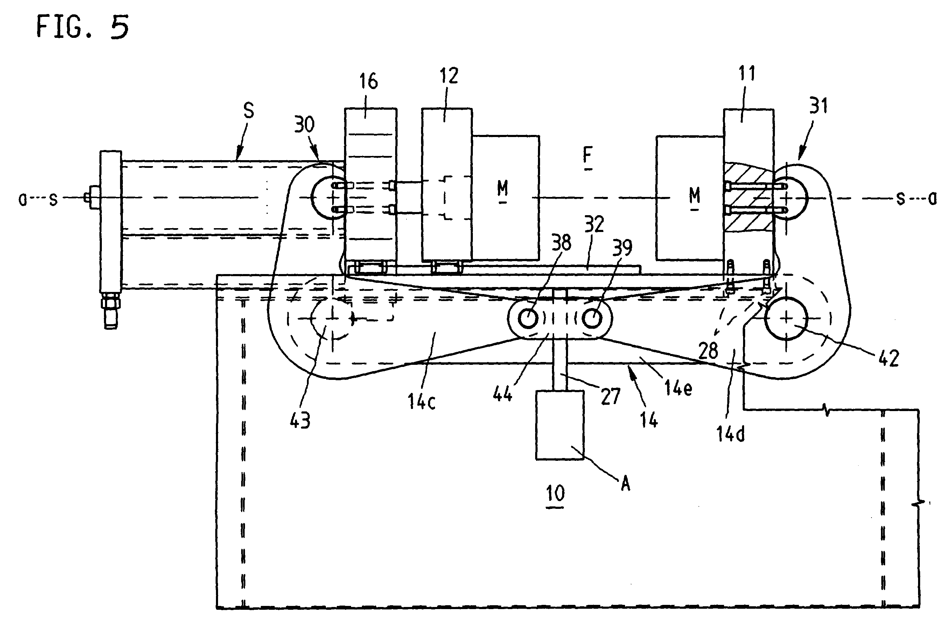

Die Fign. 1 und 5 zeigen die Formschließeinheit einer Spritzgießmaschine, die zur Verarbeitung von plastifizierbaren Materialien, wie thermoplastischen Kunststoffen, keramischen Massen, Pulverspritzgußmassen und dergleichen dient. Die Spritzgießmaschine umfaßt ein Positionierungselement 10 oder einen Maschinenfuß, auf dem ein beliebig antreibbarer Schließmechanismus S zur Bewegung eines beweglichen Formträgers 12 auf einen stationären Formträger 11 zu und von diesem weg angeordnet ist. Der stationäre Formträger ist mit dem Positionierungselement 10 durch Schrauben 28 fest verbunden. Im übrigen ist die Formschließeinheit auf dem Positionierungselement 10 in Schließrichtung axial beweglich. Gemäß Fig. 1 gleiten Abstützelement 16 und beweglicher Formträger 12 auf einer Führungsleiste 32.

Ein Verformungselement 14 ist an seinem einen Ende an einem ersten Anlenkungspunkt, gebildet durch das Gelenk 31, im Bereich des stationären Formträgers 11 und an seinem anderen Ende an einem zweiten Anlenkungspunkt, gebildet durch das Gelenk 30, im Bereich des Abstützelements 16 angelenkt. Das Verformungselement übernimmt im wesentlichen nahezu allein die bei geschlossener Gießform auftretenden Kräfte und Verformungen. Um den Formspannraum F für die Einbringung der Gießform M freizuhalten, ist das Verformungselement so ausgebildet, daß es die Kräfte um den zwischen den Formträgern aufgespannten Formspannraum F herumleitet.

Das Verformungselement 14 selbst ist mehrteilig. Die Teile 14a, 14b des ersten Ausführungsbeispiels und 14c, 14d, 14e des zweiten Ausführungsbeispieles liegen teilweise nebeneinander und überdecken sich in einer quer zur Schließrichtung s-s gerichteten Ansicht teilweise, wobei die einzelnen Teile an wenigstens einem Verbindungspunkt zwischen den Enden des Verformungselements miteinander gekoppelt sind. Dieser erste Verbindungspunkt ist im ersten Ausführungsbeispiel durch den Verbindungsbolzen 40' und im zweiten Ausführungsbeispiel durch das Lagerelement 44 gebildet und ist von den Anlenkungspunkten beabstandet. Die jeweils außen liegenden Teile 14a, 14b oder 14c, 14d des Verformungselements 14 sind z.B. an einem Anlenkungspunkt angelenkt und stützen sich im übrigen z.B. an einer weiteren Stelle ab. In dem Bereich, in dem die Momentenbelastung am größten ist, liegen dabei die Teile zur Verringerung der auftretenden Verformungen nebeneinander. Das Verformungselement ist auf zwei Seiten der Schließeinrichtung S angeordnet, symmetrisch zu einer durch die Schließachse a-a gelegten vertikal stehenden Ebene. Auf jeder Seite der Schließeinrichtung S sind je wenigstens zwei Teile des Verformungselements 14 vorgesehen.

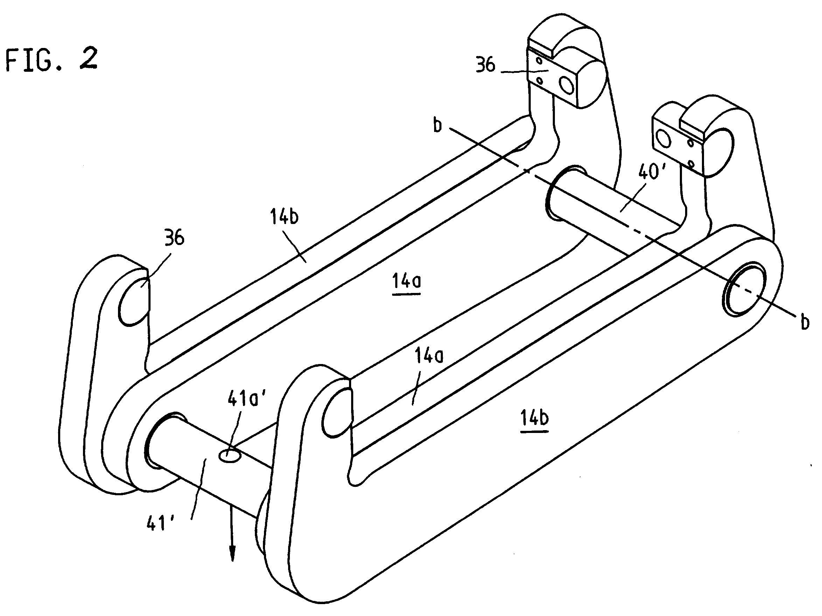

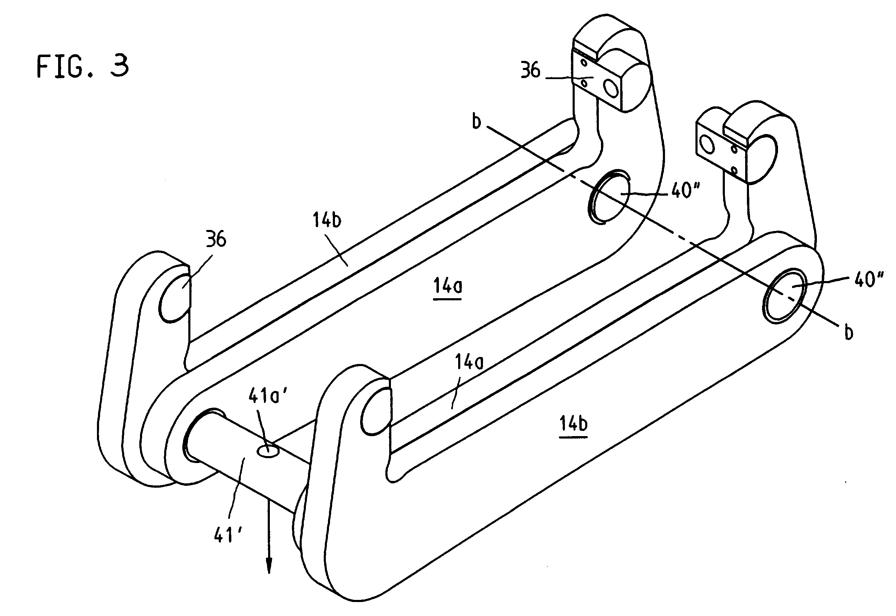

Das Verformungselement der Fign. 2 und 3 weist Verbindungsbolzen 41' auf, der nur die Teile 14a durchgreift. Dadurch ist es möglich, gleichwirkende Teile wie die Teile 14b des Verformungselements 14 gemeinsam zu bewegen. Im Bereich der Gelenkbolzen 36 werden dabei Abstützelement und stationärer Formträger 11 angelenkt. Die Antriebseinrichtung kann dann beispielsweise mit einer Spindel oder einer Kolbenstange im Bereich der Öffnung 41a' angreifen. Durch eine Bewegung in Pfeilrichtung kann dann aufgrund des langen Hebelarmes eine hohe Schließkraft zuverlässig aufgebracht werden. Wenn es dabei auch gleichgültig ist, welche Antriebsart für die Antriebseinrichtung gewählt wird, besteht hier die Möglichkeit, die Kraft durch einen elektrisch betriebenen Spindelantrieb aufzubringen.

Fig. 3 unterscheidet sich von Fig. 2 dadurch, daß der durchgehende Lagerbolzen 40', der ggf. auch durch den Maschinenfuß geführt ist, durch zwei kurze Lagerbolzen 40" ersetzt ist. Gleichwohl bilden in beiden Fällen diese Lagerbolzen eine Schwenkachse b-b aus, um die das Teil 14a Betätigung der Antriebseinrichtung bewegbar ist.

In Fig. 5 ist ein zweites Ausführungsbeispiel der Spritzgießmaschine dargestellt. Die außen liegenden Teile 14c, 14d sind an den Gelenken 30, 31 mit dem Abstützelement bzw. mit dem stationären Formträger verbunden. In der Mitte sind sie über das Lagerelement 44 an den Gelenken 38 und 39 angelenkt. Um die beiden außen liegenden Teile 14c, 14d auf Abstand zu halten, sind sie an den Verbindungsbolzen 42, 43 mit dem Teil 14e verknüpft, das die außen liegenden Teile 14c,14d dadurch mittelbar auf Abstand hält. Am Lagerelement 44 ist eine Antriebseinrichtung A vorgesehen, die bei Betätigung die Spindel 27 bewegt, so daß das Lagerelement nach unten bewegt wird, was das Aufbringen einer Schließkraft zur Folge hat. Die Antriebseinrichtung stützt sich über die Spindel an dem Teil 14e ab, so daß keine weiteren Verformungen in den Maschinenfuß eingeleitet werden.

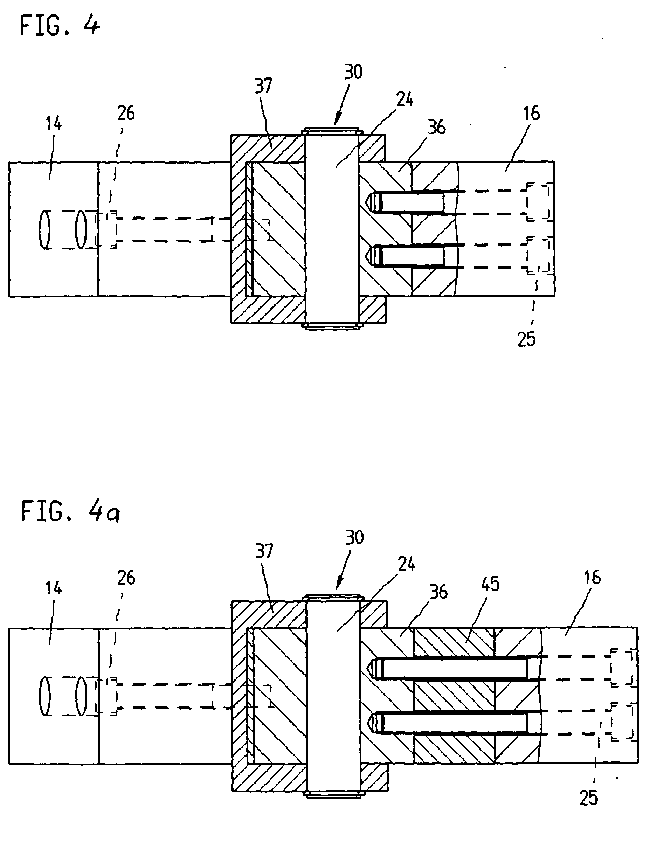

Die Gelenke 30, 31 sind in den ersten beiden Ausführungsbeispielen ähnlich ausgebildet (Fig. 4, 4a). Die Anlenkungspunkte sind grundsätzlich auf den vom Formspannraum F abgewandten Seiten der Formträger 11, 12 und des Abstützelements 16 angelenkt. Dadurch können die Biegebeanspruchungen von Abstützelement und Formträger verringert werden. Die Gelenke bestehen aus Gelenkpfannen 37 und Gelenkbolzen 36, die um Lagerbolzen 24 drehbar sind. Die Gelenkteile sind über Schrauben 25, 26 mit den gelenkig zu verbindenden Teilen verknüpft. Dies ermöglicht eine leichte Einstellung der Formparallelität. Auch können die Gelenke beliebig ausgetauscht werden und, wie sich aus einem Vergleich der Fign. 4 und 4a ergibt, können Unterlegstücke 45 zwischen den Gelenkteilen und den Teilen des Verformungselements 14 oder Abstützelement 16 bzw. stationärem Formträger 11 so eingefügt werden, daß der Abstand zwischen den Formträgern leicht veränderbar ist.

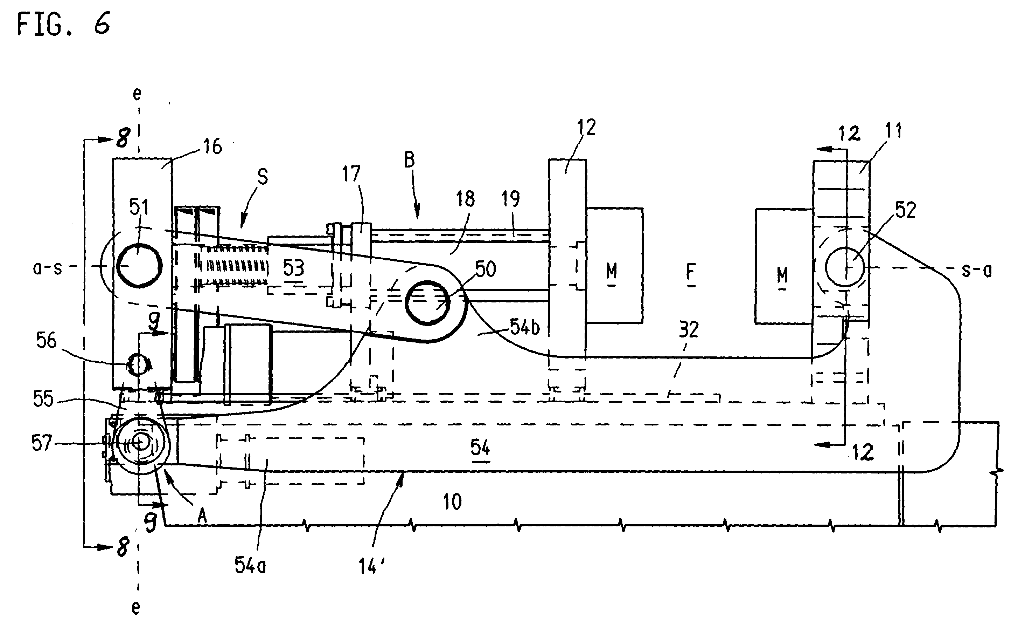

In den Figuren 6 bis 13 ist ein drittes Ausführungsbeispiel erläutert, bei dem die bei den bisherigen Ausführungsbeispielen noch relativ geschlossene, sich in weiten Bereichen überdeckende Form des Verformungselements zugunsten einer besseren Kraftübertragung aufgelöst ist. Zunächst ist jedoch auch diese Formschließeinheit weitgehend identisch zu den bisherigen aufgebaut. Über einen Schließmechanismus wird der bewegliche Formträger 12 in und außer Formschluß mit dem stationären Formträger 11 bewegt. Der bewegliche Formträger 12 ist dabei Teil einer Bewegungseinheit B, die aus einem Stützelement 17 für die Spindeln 20 eines Spindelmechanismus, Rohren 18 zur Aufnahme der Spindel und Zugankern 19 besteht, die das Stützelement 17 mit dem beweglichen Formträger 12 verspannen. Die gesamte Bewegungseinheit ist über mehrere Führungen auf der Führungsleiste 32 geführt, so daß sich eine präzise Lagerung der Bewegungseinheit ergibt. Am Stützelement 17 sind Muttern 21 befestigt, die mit den Spindeln 20 in Eingriff stehen. Die Spindeln sind koaxial mit Riemenrädern 59,60, über die Riemen 22,23 geführt sind, die von einem Antriebsmotor 61 angetrieben sind. Zwischen den Rohren 18 ist ausreichend Raum R für eine Auswerfereinheit vorhanden. Alternativ können auch andere Antriebsarten wie z.B. Zahnradgetriebe, Zahnriemen und dergleichen vorgesehen werden.

Das Verformungselement 14' ist im Bereich des stationären Formträgers 11 über den Gelenkbolzen 52 und im Bereich des Abstützelements 16 über den Gelenkbolzen 51 angelenkt. Es besteht aus einer Lasche 53 und einem klauenförmigen Teil 54, die durch einen Verbindungsbolzen 50 miteinander verbunden sind. Die Bolzen 50 und 52 liegen dabei in der Ansicht der Fig. 6 ungefähr links und rechts vom Formspannraum F. Aus Richtung des stationären Formträgers gesehen, besitzt das klauenförmige Teil 54 einen sich über den Verbindungsbolzen 50 hinaus erstreckenden Endbereich 54a. An diesem Endbereich kann eine Antriebseinrichtung A zur Aufbringung der Schließkraft günstig angreifen, da dort lediglich ein Teil der Kraft aufgebracht werden muß, der im Bereich der Gießform als Schließkraft wirkt.

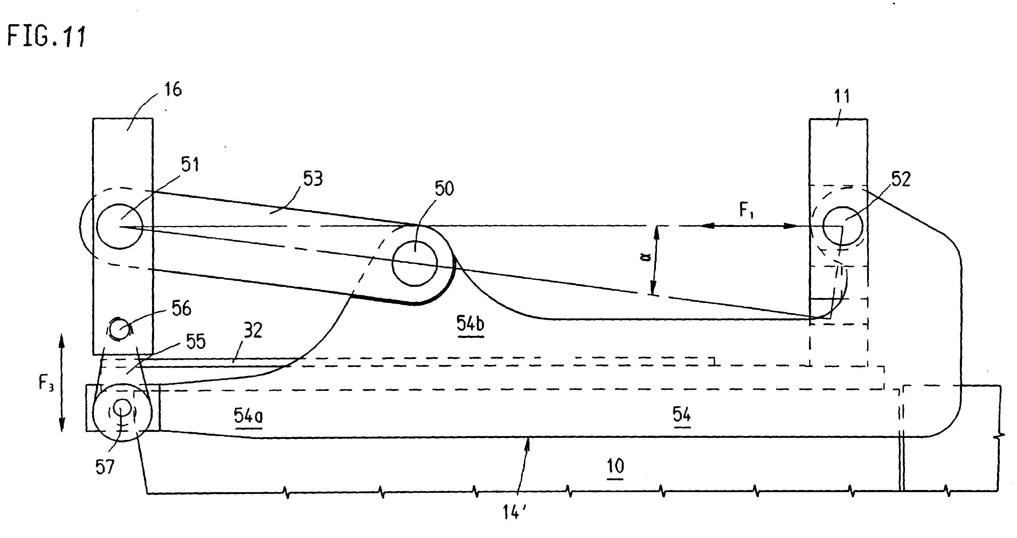

Eine Erklärung hierfür ergibt sich aus Fig. 11. Die Lasche 53 ist mit einem Winkel $\alpha$ gegenüber der Schließrichtung in Richtung auf das klauenförmige Element geneigt und entlang der Wirkungslinie der Lasche 53 entsteht eine Normal kraft, die sich in die Schließkraft $F_1$ und in die Betätigungskraft $F_3$ nach der Formel

$$F_1 = F_3 \times (\cos \alpha / \sin \alpha)$$

aufspaltet. Je kleiner also der Winkel $\alpha$, desto weniger Kraft muß aufgebracht werden, um die Schließkraft $F_1$ aufzubringen.

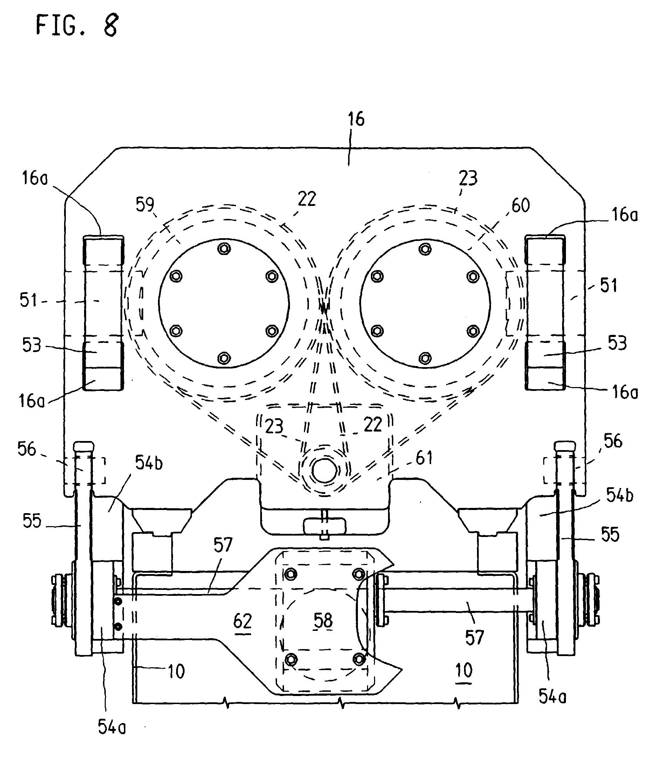

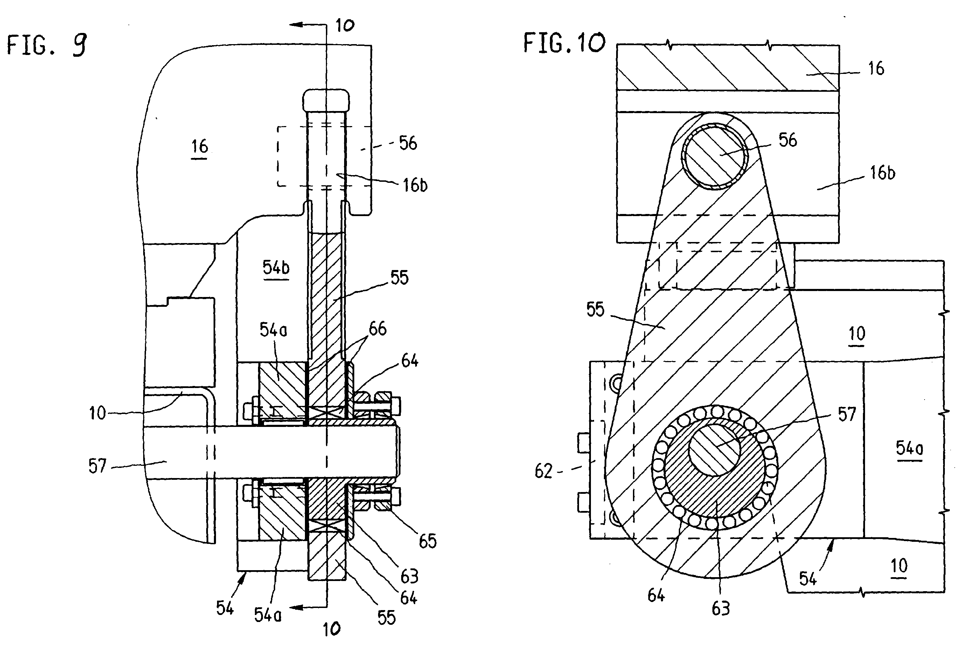

Die Antriebseinrichtung A ist so befestigt, daß sie keine Verformungen auf den Maschinenfuß überträgt. Sie greift über einen Bolzen 56 am Abstützelement 16 an. Der Bolzen trägt eine Verbindungslasche 55, die an ihrem anderen Ende von einer Exzenterwelle 57 durchgriffen ist. Über die Exzenterwelle 57 ist gemäß den Figuren 8-10 auch der klauenförmige Teil 54 des Verformungselements gelagert. Gemäß Fig. 9 ist über Spannmittel 65 auf der Exzenterwelle ein Exzenterlager 63 befestigt, das über Lager 64 mit der Verbindungslasche 55 in Verbindung steht. Wird die Exzenterwelle 57 vom Exzenterantrieb 58 betätigt, so ergibt sich eine in Fig. 6 nach unten wirkende Kraft, die den Endbereich 54a nach unten drückt und somit zugleich die Schließkraft erzeugt. Je nach Umfang der Betätigung des Exzenters kann dabei eine Schließkraftregelung erfolgen, wenn z.B. der Exzenter nicht vollständig betätigt wird. Zwischen der Verbindungslasche 55 und dem Endbereich 54a des klauenförmigen Teils sind Lagerflächen 66 vorgesehen, die zugleich das Lager 64 nach außen abdecken.

Der Exzenterantrieb 58 der Antriebseinrichtung ist an einer Momentenstütze 62 befestigt, die zugleich zusammen mit den klauenfömigen Teilen und dem stationären Formträger 11 einen Kraftrahmen bildet.

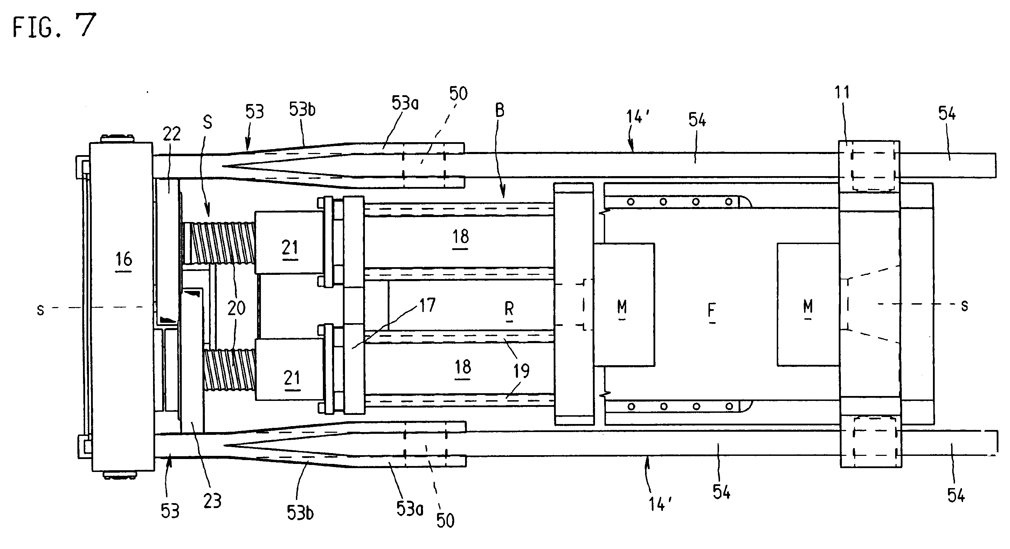

Gemäß Fig. 6 liegt der Gelenkbolzen 51 zur Anlenkung der Lasche 53 am Abstützelement 16, der Bolzen 56 zur Anlenkung der Verbindungslasche 55 am Abstützelement 16 und die Exzenterwelle 57 in einer Ebene e-e, so daß es infolge der Schließkraftaufbringung zumindest im Bereich der Krafteinleitung am Endbereich 54a kaum zu Momentenbelastungen kommen kann. Um den Kraftfluß überhaupt gleichmäßig zu gestalten, ist aber auch vorgesehen, die Lasche 53 gemäß Fig. 7 zur Aufnahme einer höckerartigen Anformung 54b des klauenförmigen Teils 54 aufzuspalten. Im Spaltbereich 53a sind die Lasche und die höckerartige Anformung 54b des klauenförmigen Teils 54 des Verformungselements 14' von dem Verbindungsbolzen 50 durchdrungen. Die Lasche selbst geht über einen Übergangsbereich 53b in den Spaltbereich über und kann entweder einteilig sein oder aus zwei entgegengesetzt aufgebogenen Elementen zusammengefügt werden. Diese gabelförmige Ausbildung ermöglicht eine symmetrische Krafteinleitung der in der Lasche 53 auftretenden hohen Normalkraft in das klauenförmige Teil 54. Die höckerartige Anformung 54b erstreckt sich unter Verringerung des Winkels $\alpha$ bis nahezu in die Ebene der Achsen der Gelenkbolzen 51,52.

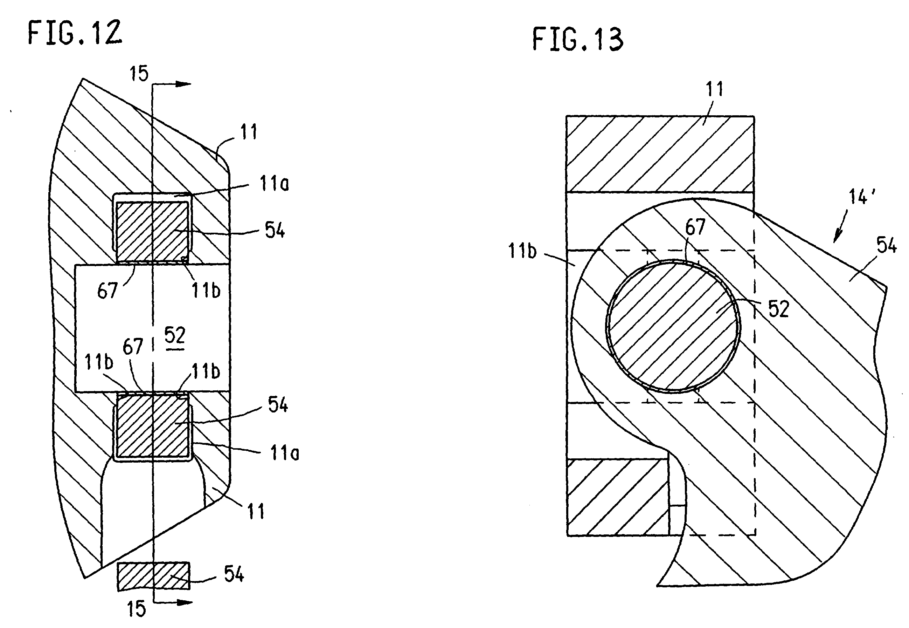

Eine ähnliche symmetrische Krafteinleitung ist aber auch im Bereich von Abstützelement 16 und stationärem Formträger 11 vorgesehen (Fig. 12,13). Abstützelement 16 und stationärer Formträger 11 besitzen Ausnehmungen 11a,16a, in die das Verformungselement 14' eintaucht.

In dieser Stellung werden diese Teile dann durch senkrecht zur Ausnehmung 11a,16a einbringbare Gelenkbolzen 51,52 fixiert, die sich an Wandungen 11b von Abstützelement 16 und stationärem Formträger 11 abstützen. Um jedoch eine dauerhafte Krafteinleitung und Lagerung zur gewährleisten, sind Lager 67 ergänzend vorgesehen, die leicht austauschbar sind wie in den anderen Ausführungsbeispielen.

Falls bei diesem dritten Ausführungsbeispiel ebenfalls eine Anpassung des Formhöhenmaßes an kleinere Spritzgießformen erwünscht ist, so kann dem auch hier Rechnung getragen werden, indem die Lasche entsprechend durch eine Lasche anderer Länge ersetzt wird und gegebenenfalls der Endbereich durch Unterlegstücke ebenfalls verändert wird. Aufgrund der verhältnismäßig geringen am Endbereich 54a angreifenden Kraft, ist dies problemlos möglich.

In allen Ausführungsbeispielen kann eine Einstellung und Justierung der Plattenparallelität dadurch erleichtert werden, daß zwei Gewindespindeln im Bereich der Schließeinrichtung vorgesehen werden, die durch geringfügiges Drehen die Einstellung ermöglichen. Ebenso ist dadurch eine Veränderung des Formhöhenmaßes möglich. Da in den Ausführungsbeispielen auf einen starren Rahmen im Verformungselement 14,14' verzichtet wird, wird das Verformungselement aktiv zur Krafterzeugung eingesetzt. Es übernimmt dabei nicht nur die Funktion der Krafterzeugung, sondern erlaubt auch eine Verringerung der aufzubringenden Kräfte, indem es Hebelgesetze auszunutzen hilft.

Alternativ zu den dargestellten Ausführungsbeispielen des Verformungselements ist es auch denkbar, sowohl den in Schließrichtung angeordneten Hebelarm des Elemenes 14b bis unter die Spritzgießeinheit zu verlängern oder stattdessen den in Schließrichtung angeordneten Arm des Teiles 14a unter die Spritzgießeinheit zu legen und dort durch eine Antriebseinrichtung die Schließkraft in umgekehrter Richtung des Pfeiles von Fig. 2 aufzubringen.

**Patentansprüche**

1. Spritzgießmaschine zur Verarbeitung von plastifizierbaren Massen mit

   - einem Positionierungselement (10),
   - einem fest mit dem Positionierungselement (10) verbundenen stationären Formträger (11),
   - einem beweglichen Formträger (12), der zwischen sich und dem stationären Formträger (11) einen Formspannraum (F) ausbildet,
   - einem Schließmechanismus (S) zur Bewegung des beweglichen Formträgers (12) auf dem stationären Formträger (11) zu und von diesem weg,
   - einem in Schließrichtung (s-s) beweglich auf dem Positionierungselement (10) gelagerten Abstützelement (16) für den Schließmechanismus (S),
   - einem im Bereich des stationären Formträgers (11) und im Bereich des Abstützelements (16) an Anlenkungspunkten angelenkten, vom Positionierungselement (10) unabhängigen, mehrteiligen Verformungselement (14,14'), das im wesentlichen die auftretenden Kräfte und Verformungen aufnimmt und um den Formspannraum (F) herumleitet und symmetrisch zu einer die Schließachse (a-a) beinhaltenden vertikalen Ebene ist,

   dadurch gekennzeichnet, daß auf beiden Seiten der vertikalen Ebene die Teile des Verformungselements, die im Bereich des stationären Formträgers (11) oder im Bereich des Abstützelements (16) angelenkt sind, miteinander gekoppelt und mit stationärem Formträger (11) und Abstützelement (16) einen aktiv bewegbaren Kraftrahmen bilden, in dem eine Antriebseinrichtung (A) eine Relativbewegung zwischen Teilen des Verformungselements (14,14') erzeugt und nur innerhalb des Kraftrahmens angreift.

2. Spritzgießmaschine nach Anspruch 1, dadurch gekennzeichnet, daß das Verformungselement auf beiden Seiten der vertikalen Ebene jeweils wenigstens drei Teile (14c, 14d, 14e) umfaßt, wobei die außen liegenden Teile (14c, 14d) mittig miteinander über ein Lagerelement (44) gelenkig verbunden sind, daß die außen liegenden Teile (14c, 14d) mittelbar auf Abstand gehalten sind, und daß durch eine am Lagerelement (44) angreifende Antriebseinrichtung eine Relativbewegung der Teile erzeugbar ist.

3. Spritzgießmaschine nach Anspruch 1, dadurch gekennzeichnet, daß das Verformungselement (14') eine am Abstützelement (16) angelenkte Lasche (53) und ein damit verbundenes klauenförmiges Teil (54) aufweist, das am stationären Formträger (11) angelenkt ist und sich aus Richtung des stationären Formträgers (11) über einen Verbindungspunkt (Verbindungsbolzen 50) mit einem Endbereich (54a) hinaus erstreckt, an dem eine am Abstützelement (16) angreifende Antriebseinrichtung (A) angreift.

4. Spritzgießmaschine nach Anspruch 3, dadurch gekennzeichnet, daß die Antriebseinrichtung (A) über eine Verbindungslasche (55) an einem Bolzen (56) angelenkt ist, welche Verbindungslasche (55) über eine Exzenterwelle (57) am Endbereich (54a) des klauenförmigen Teils (54) angelenkt ist, die von einem Exzenterantrieb (58) betätigbar ist.

5. Spritzgießmaschine nach Anspruch 4, dadurch gekennzeichnet, daß der Gelenkbolzen (51) zur Anlenkung der Lasche (53) am Abstützelement (16), der Bolzen (56) zur Anlenkung der Verbindungslasche (55) am Abstützelement (16) und die Exzenterwelle (57) in einer Ebene (e-e) liegen.

6. Spritzgießmaschine nach einem der Ansprüche 3 bis 5, dadurch gekennzeichnet, daß die Lasche (53) zur Aufnahme des klauenförmigen Teils (54) im Bereich des Verbindungsbolzens (50) gespalten und im Spaltbereich (53a) Lasche und klauenartiges Teil (54) vom Verbindungsbolzen (50) durchdrungen sind und daß der klauenförmige Teil (54) im Bereich des Verbindungsbolzens (50) zur Anlenkung der Lasche (53) eine höckerartige Anformung (54b) besitzt, die sich nahezu bis in die Ebene erstreckt, in der die Achsen der Gelenkbolzen (51,52) für die Anlenkung der Lasche (53) am Abstützelement (16) und des klauenförmigen Teils (54) am stationären Formträger (11) liegen.

7. Spritzgießmaschine nach einem der vorhergehenden Ansprüche, dadurch gekennzeichnet, daß an den Anlenkungspunkten Abstützelement (16) und stationärer Formträger (11) Ausnehmungen (11a,16a) aufweisen, in die das Verformungselement (14') eintaucht und in dieser Stellung durch senkrecht zur Ausnehmung (11a,16a) einbringbare Gelenkbolzen (51,52) fixierbar ist, die sich an Wandungen (11b) von Abstützelement (16) und stationärem Formträger (11) abstützen.

8. Spritzgießmaschine nach einem der vorhergehenden Ansprüche, dadurch gekennzeichnet, daß Gelenkteile (Gelenkbolzen 36,51,52, Gelenkpfannen 37) von Gelenken (30,31) zur Anlenkung des Verformungselements (16) lösbar an den Anlenkungspunkten angeordnet sind.

9. Spritzgießmaschine nach Anspruch 12, dadurch gekennzeichnet, daß der Abstand zwischen den Formträgern (11, 12) durch Unterlegstücke (45) veränderbar ist, die zwischen den Gelenkteilen und den Teilen des Verformungselements (14) oder dem Abstützelement (16) bzw. dem stationären Formträger (11) einfügbar sind.

## Claims

1. Injection moulding machine for processing plasticisable masses having

   - a positioning element (10),
   - a stationary mould carrier (11), securely connected to the positioning elements (10),
   - a moveable mould carrier (12) which forms a mould tentering space (F) between itself and the stationary mould carrier (11),
   - a closing mechanism (S) to move the moveable mould carrier (12) onto the stationary mould carrier (11) and away from it again,
   - a supporting element (16) for the closing mechanism (S), said supporting element being mounted moveable in the closing direction (s-s) on the positioning element (10),
   - a multipart deforming element (14, 14') coupled in the region of the stationary mould carrier (11) and in the region of the supporting element (16) to coupling points, and independent of the positioning element (10), which deforming element substantially takes up the forces and deformations arising and guides them around the mould tentering space (F), and is symmetrical to a vertical plane containing the closing axis (a-a),
   characterised in that, on both sides of the vertical plane, the pieces of the deforming element, which are coupled in the region of the stationary mould carrier (11) or in the region of the supporting element (16), are coupled with one another and form with the stationary mould carrier (11) and supporting element (16) an actively moveable force frame, in which a drive device (A) generates a relative movement between pieces of the deforming element (14, 14') and only acts within the force frame.

2. Injection moulding machine according to claim 1, characterised in that the deforming element on both sides of the vertical plane comprises respectively at least three pieces (14c, 14d, 14e), the externally lying pieces (14c, 14d) being articulated to one another centrally via a bearing element (44), in that the externally lying pieces (14c, 14d) are kept indirectly at a distance, and in that a relative movement of the pieces may be generated by a drive device engaging on the bearing element (44).

3. Injection moulding machine according to claim 1, characterised in that the deforming element (14') has a bracket (53) coupled to the supporting element (16) and a claw-shaped piece (54) connected thereto and which is coupled to the stationary mould carrier (11) and extends from the direction of the stationary mould carrier (11) beyond a connecting point (connecting pin 50) with an end region (54a), on which a drive device (A) engaging on the supporting element (16) engages.

4. Injection moulding machine according to claim 3, characterised in that the drive device (A) is linked via a connection bracket (55) to a stud (56), this connection bracket being coupled by an eccentric shaft (57) on the end region (54a) of the claw-shaped piece (54), which shaft may be actuated by an eccentric drive (58).

5. Injection moulding machine according to claim 4, characterised in that the hinge bolt (51) to couple the bracket (53) on the supporting element (16), the stud (56) to couple the connection bracket (55) on the supporting element (16) and the eccentric shaft (57) lie in one plane (e-e).

6. Injection moulding machine according to one of claims 3 to 5, characterised in that the bracket (53) for receiving the claw-shaped piece (54) in the region of the connecting pin (50) is split and that in the split region (53a) the bracket and claw-shaped piece (54) are penetrated by a connecting pin (50), and in that the claw-shaped piece (54) has in the region of the connecting pin (50) a hump-shaped forming (54b) for coupling the bracket (53) and which extends almost into the plane in which lie the axes of the hinge bolts (51, 51) for coupling the bracket (53) on the supporting element (16) and coupling the claw-shaped piece (54) on the stationary mould carrier (11).

7. Injection moulding machine according to one of the preceding claims, characterised in that at the coupling points, supporting element (16) and stationary mould carrier (11) have recesses (11a, 16a) into which the deforming element (14') plunges and may be fixed in this position by hinge bolts (51, 52), which may be introduced vertically to the recess (11a, 16a) and which are supported at the walls (11b) of supporting element (16) and stationary mould carrier (11).

8. Injection moulding machine according to one of the preceding claims, characterised in that joint portions (hinge bolts 36, 51, 52, joint sockets 37) of joints (30, 31) for coupling the deforming element (16) are detachably disposed at the coupling points.

9. Injection moulding machine according to claim 12, characterised in that the spacing between the mould carriers (11, 12) may be altered by washer pieces (45) which may be inserted between the joint portions and the pieces of the deforming element (14) or between the supporting element (16) or respectively the stationary mould carrier (11).

## Revendications

1.  Presse d'injection pour la transformation de matières plastifiables comportant

    -   un élément de positionnement (10),

    -   un porte-moule stationnaire (11) solidaire de l'élément de positionnement (10),

    -   un porte-moule mobile (12) qui forme un espace de serrage de moule (F) entre lui-même et le porte-moule stationnaire (11),

    -   un mécanisme de fermeture (S) pour le déplacement du porte-moule mobile (12) sur le porte-moule stationnaire (11), vers celui-ci et dans le sens inverse,

    -   un élément d'appui (16), monté mobile dans le sens de fermeture (s-s), sur l'élément de positionnement (10), pour le mécanisme de fermeture (S),

    -   un élément de déformation (14,14') en plusieurs parties, articulé dans la zone de l'élément d'appui (16) en des points d'articulation indépendants de l'élément de positionnement (10), et qui absorbe essentiellement les forces et les déformations se produisant et qui est guidé autour de l'espace de serrage de moule (F) et qui est symétrique par rapport à un plan vertical contenant la tige de fermeture (a-a), caractérisée en ce que sur les deux côtés du plan vertical, les parties de l'élément de déformation, qui sont articulées dans la zone du porte-moule stationnaire (11) ou dans la zone de l'élément d'appui (16), sont accouplées entre elles et forment un cadre des forces activement déplaçable avec le porte-moule stationnaire (11) et l'élément d'appui (16), cadre dans lequel un dispositif d'entraînement (A) produit un déplacement relatif entre des parties de l'élément de déformation (14,14') et n'agit qu'à l'intérieur du cadre des forces.

2.  Presse d'injection selon la revendication 1, caractérisée en ce que l'élément de déformation comprend sur chacun des deux côtés du plan vertical au moins trois parties (14c, 14d, 14e), les parties (14c, 14d) situées à l'extérieur étant reliées entre elles de manière articulée, au milieu, par un élément de palier (44), en ce que les parties (14c, 14d) situées à l'extérieur sont maintenues indirectement espacées et en ce qu'un déplacement relatif des parties peut être produit par un dispositif d'entraînement agissant sur l'élément de palier (44).

3.  Presse d'injection selon la revendication 1, caractérisée en ce que l'élément de déformation (14') comporte une patte (53), articulée à l'élément d'appui (16) ainsi qu'un élément en forme de griffe (54) relié à celle-ci, qui est articulé au porte-moule stationnaire (11) et qui s'étend à partir de la direction du porte-moule stationnaire (11) au-delà d'un point de liaison (tige de liaison 50), par une zone terminale (54a) sur laquelle agit un dispositif d'entraînement (A) agissant sur l'élément d'appui (16).

4.  Presse d'injection selon la revendication 3, caractérisée en ce que le dispositif d'entraînement (A) est articulé, par une éclisse de liaison (55), à une tige (56), laquelle éclisse de liaison (55) est articulée, par un arbre excentrique (57), à la zone terminale (54a) de l'élément (54) en forme de griffe, lequel arbre est actionnable par un entraînement excentrique (58).

5.  Presse d'injection selon la revendication 4, caractérisée en ce que la tige d'articulation (51) pour l'articulation de la patte (53) sur l'élément d'appui (16), la tige (56) pour l'articulation de l'éclisse de liaison (55) sur l'élément d'appui (16) et l'arbre excentrique (57) se situent dans un plan (e-e).

6.  Presse d'injection selon l'une des revendications 3 à 5, caractérisée en ce que la patte (53) est fendue dans la région de la tige de liaison (50), pour recevoir l'élément en forme de griffe (54) et dans la zone de la fente (53a), la patte et l'élément en forme de griffe (54) sont traversés par la tige de liaison (50) et en ce que l'élément en forme de griffe présente, dans la région de la tige de liaison (50) pour l'articulation de la patte (53), un bossage (54b) qui s'étend approximativement jusque dans la plan dans lequel se situent les axes des tiges d'articulation (51, 52) pour l'articulation de la patte (53) sur l'élément d'appui (16) et de l'élément en forme de griffe (54) sur le porte-moule stationnaire (11).

7.  Presse d'injection selon l'une des revendications précédentes, caractérisée en ce qu'aux points d'articulation l'élément d'appui (16) et le porte-moule stationnaire (11) présentent des évidements (11a,16a) dans lesquels pénètre l'élément de déformation (14') qui, dans cette position, peut être fixé par des tiges d'articulation (51, 52) à introduire perpendiculairement à l'évidement (11a, 16a), lesquelles tiges prennent appui contre des parois (11b) de l'élément d'appui (16) et du porte-moule stationnaire (11).

8. Presse d'injection selon l'une des revendications précédentes, caractérisée en ce que des éléments d'articulation (tiges d'articulation 36, 51, 52, cavités d'articulation 37) d'articulations (30,31), sont disposés de manière détachable aux points d'articulation, pour l'articulation de l'élément de déformation (16).

9. Presse d'injection selon la revendication 12, caractérisée en ce que la distance entre le porte-moule (11, 12) peut être modifiée par des cales (45), qui peuvent être insérées entre les éléments d'articulation et les parties de l'élément de déformation (14) ou l'élément d'appui (16) ou le porte-moule fixe (11).

FIG. 1

FIG. 2

b

40'

36

b

36

14b

14a

14a

14b

41a'

41'

FIG. 3

FIG. 4

FIG. 4a

FIG. 5

FIG. 6

FIG. 7

FIG. 8

FIG. 10

FIG. 9

FIG.11

FIG.13

FIG.12